# EUROPEAN PATENT SPECIFICATION

(11) **EP 2 653 526 B1**
(45) Date of publication and mention of the grant of the patent: **04.03.2015**
(21) Application number: 13001835.1
(22) Date of filing: 09.04.2013
(51) Int. Cl.: C10J 3/66, C10J 3/84, C01B 3/52, B01D 53/14, C10K 1/16, C10K 1/18, C10K 3/00, C10B 53/07

(54) **Process for removing tar and gasifying the carbon residual coming from pyrolysis of organic substances**
Verfahren zum Entfernen von Teer und Gasifizierung des aus der Pyrolyse von Substanzen kommenden Restkohlenstoffs
Procédé de retrait de goudron et de gazéification des résidus de carbone provenant de la pyrolyse de substances organiques

(30) Priority: 18.04.2012 IT TO20120348
(43) Date of publication of application: 23.10.2013
(73) Proprietor: Fenergia S.r.l., 10053 Bussoleno (TO) (IT)
(72) Inventor: Giancarlo, Baldi, 10053 Bussoleno (TO) (IT); Grieco, Enrico Maria, 10053 Bussoleno (TO) (IT); Fissore, Davide, 10053 Bussoleno (TO) (IT)
(74) Representative: Garavelli, Paolo

(56) References cited:
- EP-A2- 1 312 662
- DE-A1-102008 027 858
- US-A1- 2010 228 062

## Description

The present invention refers to a process for removing tar and gasifying the carbon residual coming from pyrolysis of organic substances.

As known, pyrolysis is a thermo-chemical decomposition process of organic substances, such as for example biomasses, generated inside reactors like pyrolysers and obtained by applying heat, and with the complete absence of an oxidising agent, normally oxigen, to perform a thermally induced homolysis: under such conditions, the organic substance is subjected to the scission of originary chemical links with the formation of simpler molecules. In particular, the pyrolysis of an organic substance produces:
- gas, composed of CO, CO₂, H₂, CH₄ and other light hydrocarbons C₂-C₄;
- tar, composed of medium-high boiling composites, conventionally having a boiling temperature at atmospheric pressure that is greater than or equal to the benzene pressure, which, at pyrolysis temperature, appear at their gaseous state, while at ambient temperature condensate, giving rise to a tarry liquid;
- carbon residual or char, composed of a carbon matrix which remains as solid end product at the pyrolysis temperature.

The percentage amount and the constitution of the three above products change upon changing the substance under pyrolysis; anyway, tar and carbon residual easily contribute, in certain cases, to 70-85% of the original dry mass.

The use of a gaseous product for energy and/or chemical purposes (for example for producing methanol) requires its purification from tar, since this gives rise to tarry deposits that, after some time, prevent the process from being performed; in the chemical use, they also easily poison possible catalysts used in the transforming process. The purification of gas from tar required for an energy and/or chemical use is rather high (up to 0.5 g/Nm³): it is usually performed through low-temperature condensation and removal of the condensate through washing with water, with final problems when treating water to be dispensed with. Recently, washing with mineral and vegetal oils has been introduced, which takes care both of condensing and of melting the tar. Tar removal treatments through catalytic cracking are still being studied, but still far way from having a commercial application, since tar poisons the catalyst very easily and irreversibly.

The carbon residual is usually employed as fuel for simple combustion or, if the product is a marginal fraction of the material sent to pyrolysis, removed as solid waste.

In both cases, the lack of use of energy contained in tar and solid carbon residual strongly impairs the pyrolysis process from the energy point of view. In EP 1 312 662, a gasification process involving pyrolysis and char combustion is disclosed.

Therefore, object of the present invention is solving the above prior art problems by providing a process for removing tar and gasifying the carbon residual coming from pyrolysis of organic substances that allows providing better energy values for such products.

Moreover, an object of the present invention is providing a process that allows reducing tar in gases coming from pyrolysis and gasifying operations for organic substances through washing with vegetal or mineral oils.

The above and other objects and advantages of the invention, as will appear from the following description, are obtained with a process as claimed in claim 1.

It is intended that the enclosed claim is an integral part of the present description.

The present invention will be better described by some preferred embodiments thereof, provided as a non-limiting example, with reference to the enclosed drawings, in which:

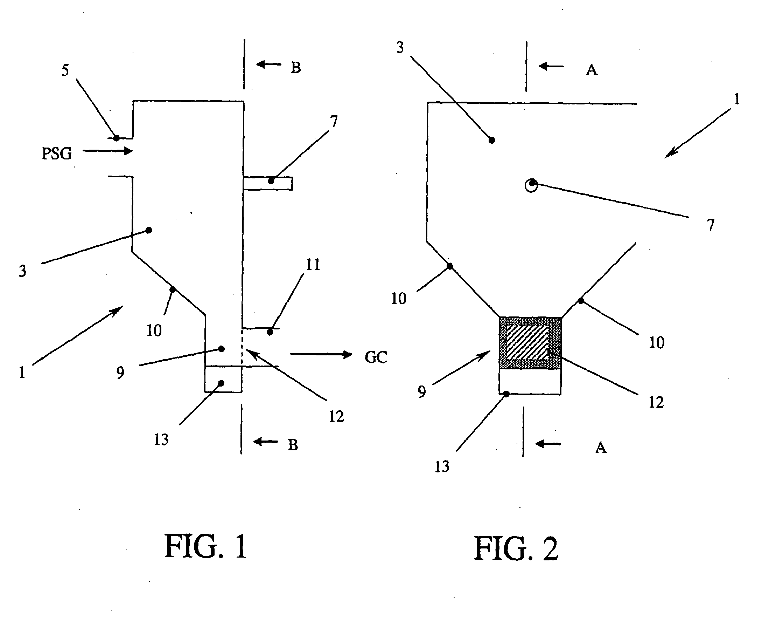

- Figure 1 shows a view along section line A-A of a device suitable to perform the process according to the present invention; and
- Figure 2 shows a view along section line B-B of the device of Figure 1.

With reference to the Figures, it is possible to note that a preferred embodiment of the post-heater device 1 suitable to perform the process according to the present invention comprises:
- at least one upper gasifying chamber 3 of the carbon residual equipped with at least one first opening 5 for entering solid and gaseous pyrolysis products PSG coming, for example, from at least one pyrolyser (not shown): obviously, solid and gaseous products coming from the pyrolyser can enter the gasifying chamber 3 in various modes, and it is possible to provide that such entering is unique through a single first opening 5 or separate through a plurality of different first openings 5, substantially depending on the pyrolyser geometry and engineering; preferably, the pyrolyser is connected to such gasifying chamber 3 through such opening 5;
- at least one burner 7 adapted to heat, preferably with direct flame, all gases present inside such gasifying chamber 3: obviously, the gasifying chamber 3 is at least covered with refractory material: preferably, gases inside such gasifying chamber 3 are heated with direct flame with the burner 7 up to a temperature of at least 1000 °C;
- at least one lower chamber 9 for forming a settling bed, with a substantially granular consistency, of the combustion solid coming from such gasifying chamber 3, such lower chamber 9 being preferably below such gasifying chamber 3 in order to favour such gravity-type settling: preferably, the lower chamber 9 has a smaller section than such gasifying chamber 3 and consequently is fitted to this latter one through slanted and converting side walls 10;
- at least one second opening 11, preferably arranged next to such lower chamber 9, for exiting combustible gases GC, possibly still containing tar, produced in such settling bed by the crossing of hot gases coming from such gasifying chamber 3: in particular, at the temperature of the gasifying chamber 3, in the settling bed crossed by the hot gases, gasifying reactions occur for producing combustible gases GC, among which the main ones are:
   1) C + O₂ = CO
   2) CO₂ + C = 2CO
   3) H₂O + C = CO + H₂.

Preferably, such second opening 11 is equipped with at least one means for filtering combustible gases GC comprising, for example, at least one grid 12 arranged in a substantially vertical position;
- purifying means (not shown) for such combustible gases GC: preferably, the purifying means comprise at least one dry dust exhaust;
- washing means (not shown) of such combustible gases GC with vegetal or mineral oil: preferably, washing of combustible gases GC occurs with such oil counter-flowing with respect to the flow of such gas;
- means (not shown) for withdrawing such vegetal or mineral oil used after washing such combustible gases GC and for inserting such vegetal or mineral oil, and possibly air, inside the gasifying chamber 3.

Ashes remaining in the post-heater device 1 after the gasifying reactions can be scavenged through withdrawing means 13 with various shapes (scroll, star valve, etc.) preferably cooperating with at least one sensor which measures the pressure difference between gasifying chamber 3 and outlet duct of combustible gases GC through the second opening 11 to be actuated in on-off mode. It must be noted that combustible gases GC and ashes move along two different outlet paths, namely, respectively, through the second opening 11 and the withdrawing means 13.

The present invention is a process for removing tar and gasifying the carbon residual coming from pyrolysis of organic substances, preferably through a post-heater device 1 as described above, preferably placed downstream of at least one pyrolyser, comprising the steps of:
a) heating, with direct flame up to a temperature of at least 1000 °C, solid and gaseous pyrolysis products PSG, for example coming from such pyrolyser, in a combustion atmosphere comprising vegetal or mineral oil containing tar and possibly air;
b) settling in a settling bed the combustion solids coming from such combustion atmosphere;
c) making hot gases cross such settling bed, such hot gases coming from such combustion atmosphere and withdrawing the combustible gases GC formed from such bed;
d) purifying such combustible gases GC;
e) washing such combustible gases GC with vegetal or mineral oil for removing the tar still possibly present in such gas;
f) withdrawing and inserting such vegetal or mineral oil containing tar of the combustible gases GC, and possibly air, in the combustion atmosphere.

As said, through the process according to the present invention, gases present in the upper gasifying chamber 3 are heated with direct flame with at least one burner 7, preferably at least up to a temperature of 1000 °C. Heating occurs with the vegetal or mineral oil used for the final washing of combustion gases for an almost complete removal of tar, and the tar itself recovered in oil; if oil is lacking, air can be inserted into the chamber 3 and generate a partial combustion of the gas itself. Direct flames generate turbulent gas motions in the chamber 3 in order to make the temperature uniform.

The presence of free flames further generates the presence of radicals OH˙, O˙, CH˙, etc., which, together with the high temperature, enable cracking the tar into molecules with lower molecular weight. The gas stay time in the upper gasifying chamber 3 must preferably be at least 0.5 s.

The combustion solid then falls inside the chamber 3 and is layered in the lower chamber 9, forming the granular settling bed, which the hot gases coming from the upper gasifying chamber 3 cross. At the temperature of the chamber 3, in the solidification bed, therefore, gasifying reactions occur, which, as stated, produce CO and H₂: the carbon residual is then transformed into combustible gas based on carbon monoxide and hydrogen. An important role in these reactions is played by the presence of steam which is supplied to the mixture through the combustion of oil tar-containing oil, of the tar itself and possibly of part of the pyrolysis gas.

After having crossed the settling bed, combustible gases GC exit the lower chamber 9, possibly through the grid 4 which is placed in a vertical position, and are sent to their final purification, preferably through the dry dust exhaust, and their washing with vegetal or mineral oil. Tar in fact is an organic compound which has a very high chemical-physical affinity with oils both of vegetal and of mineral origin.

From direct tests, it has been discovered that tarry products generated by pyrolysis of various plastics resulted very soluble in vegetal oils, biodiesel and commercial diesel, getting to exceed 50% of solubility for naphtalene and other similar aromatic compounds at ambient temperature.

Checking the washing temperature, which must be preferably included between 40 °C and 120 °C, a residual of tar in gas after washing lower than 200 mg/Nm³ can be ensured. Washing oil exits with a content of at least 30% in weight of tar.

The process according to the present invention has been implemented by applying a post-burner device 1 like the one described above, downstream of a pyrolyser for plastic wastes having a potentiality of 200 kg/h. Wastes treated by the pyrolyser are mostly composed of polyethylene (90%), PET(5%) and ABS(5%) and the pyrolyser produces about 160 kg/h of hydrocarbons and tar, about 27 Nm³/h of light gases and 8 kg/h of carbon residual. The temperature of gases and solid going out of the pyrolyser is equal to about 600 °C. The post-burner device 1 has a volume of about 0.6 m³, of which 0.2 m³ aimed for the supply zone of pyrolysis products and for placing the burners, 0.3 m³ useful for staying the high-temperature gas, and 0.1 m³ occupied by the gasifying area of carbon residual. The grid 4 has a height of 25 cm and a free passage section of 0.07 m².

Gas and tar at their vapour/fog states are heated in the gasifying chamber 3 by two burners 7, the first one supplied by 5 kg/h of exhaust oils obtained by the drains of gas washing systems, and the second one supplied with gas produced by the plant itself (20 Nm³/h, with PCI of 5400 kcal/Nm³). The two burners 7, in order to increase the process efficiency, are supplied with pre-heated air at 600 °C. Heat generated by the above burners 7 takes the temperature in the post-burner device 1 to exceed 1050 °C. Under such condition, efficiency of transforming tar into light hydrocarbons, CO and H2 is greater than 99%. The carbon solid produced by pyrolysis, also supplied to the post-burner device 1, is accumulated in the lower chamber 9 of the post-burner device 1 itself. Such chamber 9, given by the available room in front of the grid 12 and the room further occupied by the solids above it, is also crossed by gas, which, due to its temperature, manages to gasify the residual, cooling by about 300 °C. The combustible gas exiting the post-burner device 1, mainly composed of CH₄, C₂H₄, CO and nitrogen, has a tar content of about 2 g/Nm³, with a conversion efficiency of original tar into light gases near to 99.5 %.

Combustible gases GC are then cooled at 625 °C by recovering their heat sensible for pre-heating air of burners 7.

After the air pre-heating exchangers, combustible gases GC are cooled through a quench with exhaust vegetal oil, and sent to a washing column. Washing, performed through the same circulating oil for the quench, allows cooling the gases down to about 80 °C, reducing the tar content to values on the order of 100 mg/Nm³.

Therefore, due to the process according to the present invention, it is possible to obtain the following important advantages:
- it is possible to obtain very low values of the residual tar in the final gas (< 200 mg/Nm³);
- the still present tar is anyway free of substances that can give tarry deposits;
- tar is recovered at energy level, being used for heating gas coming from the pyrolyser and thereby enabling both the thermal cracking of the tar itself, and the gasifying reactions of the solid residual;
- the carbon residual is gasified in a fixed settling bed;
- withdrawal of ashes occurs the control of the differential pressure between the gasifying chamber 3 and the outgoing gas flow by moving on different paths.

## Claims

1. Process for removing tar and gasifying the carbon residual coming from pyrolysis of organic substances **characterised in that** it comprises the steps of:
a) heating solid and gaseous pyrolysis products (PSG) in a combustion atmosphere comprising vegetal or mineral oil containing tar and possibly air, said step of heating said solid and gaseous pyrolysis products occuring with direct flame, up to a temperature of at least 1000 °C;
b) settling, in a settling bed, combustion solids coming from said combustion atmosphere;
c) making hot gases cross said settling bed, said hot gases coming from said combustion atmosphere and withdrawing the combustible gases (GC) formed from said bed;
d) purifying said combustible gases (GC);
e) washing said combustible gases (GC) with vegetal or mineral oil for removing the tar still possibly present in said gas;
f) withdrawing and inserting said vegetal or mineral oil containing tar said combustible gases (GC), and possibly air, in said combustion atmosphere.

## Patentansprüche

1. Verfahren zur Teerbeseitigung und Vergasung der Kohlenstoffreste, die aus der Pyrolyse organischer Stoffe entstehen, das Verfahren ist **dadurch gekennzeichnet, dass** es folgende Phasen einschließt:
a) Erhitzung der festen und gasförmigen Produkte der Pyrolyse (PSG) in einer Verbrennungsatmosphäre, die Pflanzen- oder Mineralöl und ggf. Teer und Luft enthält, die genannte Erhitzungsphase der genannten festen und gasförmigen Produkte der Pyrolyse erfolgt bei direkter Flamme bis zu einer Temperatur von mindestens 1000 °C;
b) Sedimentation der festen Verbrennungsprodukte, die aus der genannten Verbrennungsatmosphäre kommen, in einer Sedimentationsschicht;
c) Durchquerung der Sedimentationsschicht durch heiße Gase, die genannten heißen Gase kommen aus der genannten Verbrennungsatmosphäre, und Entnahme der Verbrennungsgase (GC), die sich in der genannten Schicht gebildet haben;
d) Reinigung der genannten Verbrennungsgase (GC);
e) Wäsche der genannten Verbrennungsgase (GC) mit Pflanzen- oder Mineralöl zur Beseitigung des ggf. noch in den genannten Gasen vorhandenen Teers;
f) Entnahme und Einführung des genannten teerhaltigen Pflanzen- oder Mineralöls der genannten Verbrennungsgase (GC) und ggf. Luft aus der genannten / in die genannte Verbrennungsatmosphäre.

## Revendications

1. Procédé d'élimination du 'tar' (*total aerosol residue*) et de gazéification du résidu carboné provenant de la pyrolyse de substances organiques qui comprend les opérations suivantes :
a) chauffer des produits solides et gazeux de pyrolyse (PSG) dans une atmosphère de combustion comprenant de l'huile végétale ou minérale contenant du tar et éventuellement de l'air ; cette phase de chauffage des produits solides et gazeux de pyrolyse est effectuée à flamme vive, jusqu'à une température de 1000°C au moins ;
b) faire sédimenter, sur un lit de sédimentation, des solides de combustion provenant de l'atmosphère de combustion ;
c) faire traverser le lit de sédimentation par des gaz chauds provenant de l'atmosphère de combustion et prélever les gaz combustibles (GC) s'étant formés sur le lit ;
d) purifier ces gaz combustibles (GC) ;
e) laver ces gaz combustibles (GC) avec de l'huile végétale ou minérale pour éliminer le tar encore éventuellement présent dans ces gaz ;
f) prélever l'huile végétale ou minérale contenant le tar extrait des gaz combustibles (GC) et l'introduire, éventuellement avec de l'air, dans l'atmosphère de combustion.
